# EUROPEAN PATENT SPECIFICATION

(11) **EP 0 631 466 B1**
(45) Date of publication and mention of the grant of the patent: **31.07.1996**
(21) Application number: 93906545.4
(22) Date of filing: 18.03.1993
(51) Int. Cl.: A01G 31/00, E04D 11/00

(54) **CULTIVATING MEDIUM FOR PLANTS, AND METHOD FOR ITS PRODUCTION**
KULTURSUBSTRAT FÜR PFLANZEN UND VERFAHREN ZU DESSEN HERSTELLUNG
MILIEU DE CULTURE POUR PLANTES ET PROCEDE DE PRODUCTION

(30) Priority: 18.03.1992 DE 4208733
(43) Date of publication of application: 04.01.1995
(73) Proprietor: ISOVER SAINT-GOBAIN, F-92400 Courbevoie (FR)
(72) Inventor: KUMMERMEHR, Hans, D-6700 Ludwigshafen (DE); BIHY, Lothar, D-6750 Kaiserslautern (DE)
(74) Representative: KUHNEN, WACKER & PARTNER
(86) International application number: EP9300648
(87) International publication number: WO9318642

(56) References cited:
- EP-A- 0 354 748
- DE-A- 4 024 727
- PATENT ABSTRACTS OF JAPAN vol. 016, no. 106 (C-0919)16 March 1992 & JP 32 8 811 (NIPPON STEEL CHEM) 11 December 1991

## Description

The present invention concerns a cultivating medium for plants consisting of bonded mineral wool, in particular rock wool, as well as a method for producing such a cultivating medium. The invention also concerns the use of a cultivating medium for grassing soilless substrates which are extensively irrigated, i.e. irrigated by natural precipitation, as well as the use of polysaccharide products insoluble in cold water for producing hydrophilic mineral wool products having an increased water retaining capacity, which are preferably suited as a plant cultivating medium for soilless culture.

In the production of mineral wool mats, another important procedural step beside fiberization proper is the formation of the mat. As is known per se, a thermosetting resinous binding agent, in particular one on the basis of phenolic resin which later on sets under the influence of temperature and renders the mineral wool products dimensionally stable, is herefor sprayed onto the obtained mineral fibers subsequent to the fiberizing process. Concurrently with this fiberizing process, a fiber-gas-air mixture is produced and is introduced into a box-shaped vertical conduit in order to separate the fibers. The conduit comprises at its bottom side a gas-permeable, moving endless conveyor or production belt whereon the mineral wool mat, or rock wool mat, forms. An evacuation system producing a defined vacuum is located underneath the production belt.

When the fiber-gas-air mixture containing the binding agent contacts the production belt, the gas-air mixture provided with binding agent particles is evacuated from underneath the production belt, and the fibers deposit on the latter in form of a wool mat.

The mineral wool mat bonded by a thermosetting resinous binder which is obtained in said production shows excellent hydrophobic properties - beside an advantageous mechanical strength - due to subsequent curing at a temperature in excess of 200°C and further polymerization. Such hydrophobizing is particularly desirable in the case of articles of bonded mineral wool which are utilized for thermal and sound insulation in construction industry, as high demands must be put to the mechanical strength as well as to the water resistivity of these products.

If, however, bonded mineral wool articles having particular shapes are to be used e.g. as a cultivating medium for cultivating plants in soilless culture, then it is necessary for the respective mineral wool or rock wool cultivating medium to be able to adsorb water or aqueous nutrient solutions, or to absorb these into its capillary cavities in a largely homogeneous distribution in order that the roots of plants or, maybe, seeds which were e.g. deposited on the mineral wool receive a sufficient supply of water or nutrient solution. Traditionally produced bonded mineral wool products, however, do not fulfill these requirements of hydrophilic behavior because of the typically used hydrophobizing resinous binder. Therefore, it was consequently necessary to impart the mineral wool products the desired hydrophilic properties by means of suitable additives.

A plant culture medium of rock wool impregnated by starch-acrylic acid salt graft copolymer is known from JP-A-3 280 811.

It is known from EP-A-0 201 426 to impregnate mineral fibers, which are bonded with a thermosetting resinous binder and intended for processing into substrate blocks for cultivating plants, with a non-ionic surfactant on the basis of ethoxylized fatty alcohols.

Furthermore it is known from DE-A-2 057 945 to make mineral wool products water-absorbing during their production by application of a surfactant-resin mixture. In particular, to this end a urea formaldehyde resin is used as a hydrophilizing agent.

However, hydrophilizing agents containing the known surfactants present the disadvantage that the surfactants themselves are washed out from the mineral wool in the course of time, such that the mineral wool products lose their hydrophilic properties and become hydrophobic again because of the resinous binding agent content. Moreover, problems may occur with respect to the process water cycle when hydrophilizing agents containing surfactants are used.

EP-A-0 354 748, too, utilizes surfactants together with a hardly soluble inorganic material, in particular pyrogenic silicic acid. Here the surfactant appears to hold the hydrophilic silic acid at the fiber surface.

Such a cultivating medium, however, also presents the disadvantage that e.g. in extensive irrigation, e.g. by natural precipitation - such as with roof grassing measures - the surfactant is washed out, with the hydrophilizing agent, namely silicic acid, being washed out at the same time, such that such a cultivating medium is of only restricted suitability for long-term application.

In order to avoid the surfactant problem, DE-A 4 035 249 of the same applicant (not pre-published) suggests to produce cultivating media from bonded mineral wool by attaching a reversibly water-adsorbing agent which is insoluble in water.

For the water-adsorbing agent which is insoluble in water, DE-A 40 35 249 suggests to use pyrogenic silicic acid or an organic super absorber.

Particularly an acrylamide-acrylic acid co-polymer which has a physical swelling capacity when absorbing water serves as the organic super absorber.

One disadvantage of such a cultivating medium resides, however, in the relatively high production costs due to the cost of the organic super absorber.

The invention is therefore based on the objective to provide a plant cultivating medium of bonded mineral wool having good mechanical strength, which acts as a water storage, possesses hydrophilic properties not lost under weathering conditions, and may be produced at low cost.

This objective is attained by providing a polysaccharide product, except starch-acrylic acid salt graft copolymers, which is insoluble in cold water, and making it adhere to at least part of the surface of the mineral wool, and with regard to the method for producing such a cultivating medium by means of adding to the mineral wool a polysaccharide product which is insoluble in cold water, subsequent to the process of fiberizing a mineral molten material and preferably at the same time as a binding agent, furthermore by subjecting the mineral wool to a thermal curing treatment, and by subsequently exposing a primary mineral wool product obtained in this manner to air, thereby transforming the primary mineral wool product into a hydrophilic final product.

One further objective of the present invention is to grass soilless substrates such as roofs, walls, streets and paths by extensive watering by rain.

In particular, the present invention provides a plant cultivating medium of bonded mineral wool, in particular rock wool, with a polysaccharide product which is insoluble in cold water adhering to the mineral wool over at least part of its surface.

Due to the fact that a polysaccharide product insoluble in cold water adheres to the surface of the mineral wool, such a cultivating medium on the one hand attains the hydrophilic behavior required for a cultivating substrate, and on the other hand such a cultivating medium is largely resistent against washing out, e.g. by watering or weathering. This resistence against washing out is based on the fact that the polysaccharide product practically does not dissolve in cold water and can therefore not be taken off by cold water once it has been attached to the mineral wool fibers.

Such a cultivating medium therefore presents the advantage that it can easily absorb water in liquid and gaseous form, e.g. as rain, irrigating water, mist, or as water vapors contained in the atmosphere in the form of gas or droplets.

A cultivating medium according to the invention furthermore presents the advantage of the capillarity of the mineral wool increasing to the extent of allowing to position only part of the cultivating media according to the invention in water or nutrient solution for plants, whereby the plants receive a sufficient supply of water which, due to the hydrophilic behavior of the used polysaccharide product, can rise inside the cultivating substrate by capillary effect and spreads largely homogeneously over the substrate height.

Thus a cultivating medium according to the invention serves as a water storage for plants.

The polysaccharide product for producing the cultivating medium according to the present invention may be selected from among the group consisting of:
polysaccharides, esters of polysaccharides and inorganic acids, esters of polysaccharides and organic acids, ethers of polysaccharides;
starches, in particular potato starches, esters of starch and inorganic acids, esters of starch and organic acids, starch ethers, ethers of starch containing nitrogen, and cationic ethers of starch ; as well as
mixtures thereof.

Such a wide range of polysaccharide products presents the advantage that a suitable polysaccharide product may be selected in accordance with demand and the desired degree of hydrophilic behavior.

A cultivating medium which has a quaternary, cationic ether of potato starch for a polysaccharide product, presents the advantage that the macromolecular cations on the one hand allow good attachment to the mineral wool surface, in particular to oxygen or oxygen ions of the Si-O-Si bonds of the rock wool, thereby causing a quasi-ionic bond. Such a quasi-ionic bond retains the polysaccharide product on the fiber surface by means of relatively large electrostatic forces, such that washing out of such a polysaccharide product is drastically reduced if not prevented altogether.

On the other hand, such an ionic interaction of the polysaccharide product with the fiber surface has the effect that such a cultivating medium presents strong hydrophilic properties, whereby water may be transported in a similar manner as inside glass capillaries due to the capillary effect. This transport may, for example, occur in counter-direction to gravity and over greater distances than would correspond to hydrostatic pressure when disregarding the capillary forces.

A cultivating medium wherein the ether of potato starch is represented by the following chemical formula:

Starch-O-CH₂-CH(OH)-CH₂-N⁺(CH₃)₃ X⁻,

with X being selected from among the group consisting of: halogen, in particular chlorine, OH, SO₄, or the like, presents the advantage that on the one hand, an ionic interaction between the polysaccharide product and the fiber surface of the mineral wool is present, and on the other hand a strongly hydrophilic behavior of the mineral wool occurs. Moreover such a product is commercially available, e.g. under the trade name "Amylofax".

A cultivating medium which comprises precipitated and/or pyrogenic silicic acid has the advantage that by means of this silicic acid, and in particular by means of the silicic acid proportion of the cultivating medium, the pore size of the cultivating medium may be influenced. In this manner, a high proportion of silicic acid renders the pores of the cultivating medium narrower while a low proportion of silicic acid renders them larger.

A cultivating medium which comprises surfactants has the advantage that such a product may be applied almost immediately as a cultivating medium, without long delays following production.

If the cultivating medium for soilless culture of plants is being used, the surfactant may easily be washed out; this does not influence the hydrophilic behavior of the cultivating medium, however, as in a cultivating medium of the present invention - as opposed to the prior art - the surfactant plays only a minor role for the hydrophilic behavior of the cultivating medium and merely serves for activating the cultivating media immediately after production.

Producing cultivating media wherein the cultivating medium comprises approx. 1 to 5 % by weight, in particular approx. 2 to 4 % by weight, preferably approx. 2 to 3 % by weight of a binding agent on the basis of phenolic resin, and moreover at least 0.1 % by weight of polysaccharide product, in particular ether of potato starch, in proportion to the fibrous mass of the mineral wool, has the advantage that concentrations of at least 0.1 % by weight of polysaccharide product already offer excellent hydrophilic values.

A preferred range lies at 0.1 to 1 % by weight, in particular at 0.3 to 0.6 % by weight of polysaccharide product in proportion to the fibrous mass. However higher concentrations of up to in excess of 10 % by weight of polysaccharide product are also possible. A practical upper limit may herein, however, result from the fact that at such a high proportion of polysaccharide product in excess of 10 % by weight, the polysaccharide content of the cultivating medium may be degraded by the occurrence of decomposition processes, in particular by microorganisms.

Providing the cultivating medium in the form of a mineral wool felt, in particular rock wool felt, with bulk densities of approx. 30 to 200 kg/m³, in particular approx. 70 to 120 kg/m³, has the advantage that such a cultivating medium can be obtained on an industrial scale on conventional production lines for such rock wool felts.

Forming the cultivating medium as an article having a particular shape, particularly as a slab, has the advantage that areas to be grassed may easily be covered with such slabs.

Moreover such articles present the advantage that they may be walked on if necessary and if suitable support is provided.

A cultivating medium according to the invention has the advantage that on the one hand additives like fertilizers and/or plant protectives and/or fungicides and/or bactericides may further the plants' nutrition and protection, and on the other hand fungicides and/or bactericides may counteract microbic decomposition of the polysaccharide product.

A cultivating medium of this kind is produced by adding the polysaccharide product to the mineral wool following the fiberizing process of a mineral molten mass, in particular a molten basalt mass, preferably at the same time as a binding agent, by subjecting the mineral wool to a thermal curing treatment and by subsequently exposing a primary mineral wool product obtained in this manner to the influence of air, whereby the primary mineral wool product changes into a hydrophilic final product.

Due to the fact that the polysaccharide product is added to the mineral wool subsequent to the fiberizing process and at the same time as a binding agent - preferably on the basis of phenolic resin - the result is a relatively homogeneous distribution of binding agent and polysaccharide product on the fiber surface. In particular the distribution of binding agent and polysaccharide product also takes place on the surfaces of the individual fibers.

This is a consequence of the fact that the application of binding agent and polysaccharide product is as a rule effected inside the conduit where the fibers are hardly intertwined with each other yet.

Basically, however, the polysaccharide product may also be applied onto the mineral wool fibers at other suitable process locations.

Any possible measures for application of the polysaccharide product known to the person skilled in the art, e.g. spraying, submersion, etc. may be considered.

While the mineral wool obtained in this manner is cured at approx. 230°C inside a tunnel furnace, excessive water still clinging to the mineral wool fibers due to the application of binding agent or polysaccharide product first of all evaporates. This causes a hot, humid atmosphere inside the tunnel furnace, with the effect that the polysaccharide product, which is insoluble in cold water, transforms into a highly viscous solution of polysaccharide product for at least a short period of time, and as a consequence of the elevated temperature and the wetting properties of the polysaccharide product dissolved in hot environment, and due to the hydrophilic properties of such polysaccharides, the solution of polysaccharide product then creeps over the fiber surface of the mineral wool and thereby wets a large portion of the mineral wool.

Due to such creeping of the concentrated polysaccharide product solution caused by adhesion, the polysaccharide film becomes relatively thin and may thus coat the fibers with a film of polysaccharide product.

Due to the temperature prevailing inside the tunnel furnace, these polysaccharide product films continue to lose water, such that on the one hand the polysaccharide product is attached to the fiber surface as a dry polysaccharide, and on the other hand the phenolic resin sets.

In case such a primary mineral wool product is tested for its hydrophilic properties immediately after cooling down, it is found that the primary mineral wool product nearly does not have any hydrophilic properties while even being hydrophobic.

When the primary mineral wool product obtained in this manner is subsequently exposed to air, in particular atmospheric air, then it is surprisingly found that the primary mineral wool product will transform into a strongly hydrophilic final product in the course of several hours up to several days.

This hydrophilic final product fulfills all of the requirements of a cultivating medium for plants.

The surprising reversal of hydrophobic behavior into strongly hydrophilic behavior may be explained by the fact that due to the curing process any water present, even such participating in intramolecular hydrogen bonds of OH groups in the polysaccharide or in the formation of its three-dimensional structure, is removed from the polysaccharide product. Hereby it becomes possible for the polysaccharide macromolecule to be forced, due to deprivation of water, to assume a conformation wherein all of the co-valently bonded OH groups turn towards each other inside the molecule. This causes all of the hydrophobic portions of molecules to come to lie on the surface of the polysaccharide molecule, so that the polysaccharide products via their hydrophobic molecular portions enter into polar interaction with themselves as well as with the mineral fiber surface. As a result, the polysaccharides on the one hand strongly adhere to the mineral fiber surface and on the other hand initially impart strongly hydrophobic properties to the primary mineral wool product.

Furthermore it is possible that long polysaccharide chains virtually wind around the mineral wool fibers and thereby direct their hydrophobic molecular particles away from the fiber.

If now a primary mineral wool product obtained in this manner is exposed to air, in particular to atmospheric air, then the polysaccharide molecules absorb a certain proportion of the water contained in the atmospheric air, whereby their conformation may change in such a way that the hydrophilic portions of polysaccharide molecules again come to lie on the outer surfaces of the polysaccharide molecules and thereby provide the mineral wool product altogether with strongly hydrophilic properties.

This delayed hydrophilization results in a cultivating medium having the desired hydrophilic properties.

Furthermore adding surfactant to the mineral wool fibers effects a shortening of the required exposure to air. A possible reason herefor is that with water vapor, the polysaccharide molecule - following extreme deprivation of water - folds back more rapidly into its original, energetically favorable conformation under the influence of a surfactant.

An added surfactant is only of secondary importance for the hydrophilic behavior of the cultivating medium according to the invention as upon use as intended, it is washed out in the course of time.

Applying the polysaccharide product by spraying in the form of an aqueous suspension presents the advantage of such a suspension showing good processibility, because the polysaccharide product is insoluble in cold water and therefore does not result in difficultly processible, highly viscous solutions which would inevitably form with use of polysaccharide products soluble in cold water.

Such a cultivating medium is especially preferred for use in extensively irrigated grassing of soilless substrates, i.e. those irrigated by natural precipitation, in particular for roof grassing measures, wherein a roof is at least partly covered with such a cultivating medium provided with seeds or plants, with the cultivating medium, which is preferably provided in form of articles having particular shapes, in a given case being covered with a protective layer, in particular of humus or the like.

According to an embodiment of the present invention, a roof is at least partly covered with such cultivating media and provided with seeds or plants. It is useful unter certain circumstances, particularly if seeds are to be used for germination, to apply the seeds on the mineral wool slabs and then to cover them with a humus layer in order to protect them from birds and wind. As it is possible to form the cultivating medium as a mineral wool slab, the cultivating medium shows enough stability to also find use as walk-on roof covers - if sufficiently supported.

Furthermore such cultivating media show excellent resistence against weather influences.

Further advantages and features of the present invention will become evident from the description of an embodiment.

### Example

A cultivating medium formed as an article having a particular shape, in particular as a slab, is obtained in the following manner:
A molten basalt mass - as a mineral molten mass - is fiberized in a known manner, e.g. by blast drawing. Subsequent to the fiberization process, an aqueous suspension of a quaternary, cationic ester of potato starch according to the following general formula

Starch-O-CH₂-CH(OH)-CH₂-N⁺(CH₃)₃ Cl ⁻,

is sprayed onto the fibers as a polysaccharide product which is insoluble in cold water. At the same time, an aqueous binder mixture - on the basis of phenolic resin - is sprayed onto the fibers from the same nozzle, however from a different storage container. Following treatment of the mineral fibers with the suspension of polysaccharide product and the binding agent, the fibers are deposited in a known manner as a mineral wool mat and then conveyed to a tunnel furnace with an inside temperature of approx. 230°C. Inside the tunnel furnace, the mineral wool first of all loses excess water from the binding agent solution as well as from the suspension of polysaccharide product adhering to the fibers. Hereby a humid atmosphere with high temperature and high humidity is produced.

These environmental conditions have the effect that the polysaccharide product, in an exemplary case a quaternary, cationic ester of potato starch is dissolved to form a highly viscous liquid, whereby the polysaccharide due to its hydrophilic properties, in particular its cationic properties, creeps along the surface of the mineral fibers, such that the polysaccharide forms a thin film on the surface of the mineral fibers.

Subsequently the polysaccharide film continues to lose water, whereby an intramolecular arrangement of the hydrophilic groups towards the inside, or towards the surface of the mineral fibers, may result, such that the hydrophobic molecule portions of ether of potato starch as the polysaccharide product may orient themselves towards the outside, i.e. away from the fiber surface, or may attach themselves on the hydrophobic portions of the resinous binding agent in the sense of a van-der-Waals interaction. Such a mineral wool product, in an exemplary case a mineral wool slab, initially shows strongly hydrophobic properties as a primary mineral wool product because water getting into contact with such a product initially contacts only the hydrophobic portions of polysaccharide molecules, or of binding agent molecules.

It may also have an effect that the binding agent, in an exemplary case a phenolic resin, sets more or less concurrently with the above described phenomena at the polysaccharide molecule, and possibly also partly reacts with parts of the saccharide.

If a primary mineral wool product obtained in such a manner is subsequently exposed to air, in particular to atmospheric air, the hydrophobic behavior of the primary mineral wool product surprisingly reverses into hydrophilic behavior as the water contained in the air is partly absorbed by the polysaccharide, whereby the chemical environment of the polysaccharide causes the hydrophilic portions of molecules to once again move towards the surface of the polysaccharide molecule, whereby the final product receives strongly hydrophilic properties.

The hydrophilic properties of a cultivating medium on the basis of mineral wool which was obtained in such a manner are fully developed after several hours to several days, in an exemplary case after three days.

Transformation of the primary mineral wool product with hydrophobic properties into the hydrophilic final product may, however, be accelerated enormously if silicic acid, either precipitated or pyrogencially produced, and/or a surfactant are also applied on the fibers inside the conduit.

Here the surfactant appears to modify nothing but the folding, or conformation, of the polysaccharide macromolecule in a nearly spontaneous manner, such that the transformation from a hydrophobic product into a hydrophilic cultivating medium is completed immediately following production.

The silicic acid can accelerate the above transformation process, possibly due to its hygroscopic character. Furthermore added silicic acid helps determine pore sizes, with the rule applying that pore sizes decrease with increasing amounts of silicic acid.

Such a final mineral wool product can be used as a plant cultivating medium.

A typical cultivating medium obtained from rock wool felt according to the procedure described above is provided in form of a slab having a bulk density of approx. 70 kg/m³ and containing approx. 2.5 % by weight of binding agent on the basis of phenolic resin, as well as 0.5 % by weight of quaternary, cationic ether of potato starch in proportion to the fibrous mass.

The hydrophilic properties of the produced mineral wool slabs in their quality of hydrophilic final products can be measured, e.g. by the so-called sinking test. In case the cultivating media of bonded mineral wool show hydrophilic properties, they must have sunk after approx. 30 to 240 seconds, a requirement which is fulfilled by all of the mineral wool slabs obtained according to the procedure according to the invention.

Another indicator for hydrophilic properties of mineral wool products is capillary water absorption. In this test, mineral wool products to be examined have their front and rear end faces sealed with paraffin and are laid with their top or bottom surface on the surface of a water bath having a temperature of approx. 20°C. Capillary water absorption for the mineral wool slabs obtained according to the invention is between 100 and 200 g/dm² after 300 seconds, between 190 and 225 g/dm² after one hour, and betweeen 230 and 250 g/dm² after 24 hours.

In order to assure usability of the cultivating medium produced by means of polysaccharide products insoluble in water, in particular potato starch ethers, in form of mineral wool slabs which can be used for roof grassing, the cultivating media are examined with regard to suitability as fertilizing and cultivating substrate.

It was found that seeding tests with tomato seeds yielded a germination rate of more than 90%.

Furthermore actual root deformations were of such small number that the obtained mineral wool slabs are excellently suited as fertilizing and cultivating substrate.

For the purpose of roof grassing it is useful to cover the roof structure with a waterproof foil and then to apply the cultivating media obtained according to the invention in the form of mineral wool slabs so as to cover the entire area, whereby a proper cover for the roof is assured as the bonded mineral wool articles having a particular shape of the present invention simultaneously show good mechanical stability.

When covering sloping roofs, it is useful to insert waterproof strips, e.g. of conventional hydrophobic mineral fiber board material, between adjacent edges of the roof grassing slabs running parallel to the horizontal edge of the roof, thereby preventing rainwater falling on the slabs from immediately draining away towards the lower horizontal edge of the roof.

In order to avoid microbic decomposition of the polysaccharide component of the cultivating medium according to the invention, for instance a fungicide e.g. in the form of copper or silver ions may be added to the fibers.

With the present invention, therefore, a long-term use cultivating medium of high performance is provided, which may be obtained on an industrial scale at low cost and which can be used particularly for roof greening projects.

## Claims

1. Cultivating medium for plants consisting of bonded mineral wool, in particular rock wool,
**characterized in that**
a polysaccharide product, except starch-acrylic acid salt graft copolymers, which is insoluble in cold water, is provided and made to adhere to at least part of the surface of said mineral wool.

2. Cultivating medium according to claim 1, wherein said polysaccharide product is selected from the group consisting of:
polysaccharides, esters of polysaccharides and inorganic acids, esters of polysaccharides and organic acids, ethers of polysaccharides;
starches, in particular potato starches, esters of starch and inorganic acids, esters of starch and organic acids, ethers of starch, ethers of starch containing nitrogen, and cationic ethers of starch; as well as
mixtures thereof.

3. Cultivating medium according to claim 2, wherein said polysaccharide product is a quaternary, cationic ether of potato starch.

4. Cultivating medium according to claim 3, wherein said ether of potato starch is represented by the following chemical formula:
Starch-O-CH₂-CH(OH)-CH₂-N⁺(CH₃)₃ X⁻
wherein X is selected from among the group consisting of: halogen, in particular chlorine, OH, SO₄, or the like.

5. Cultivating medium according to any one of the preceding claims, wherein said cultivating medium comprises precipitated and/or pyrogenic silicic acid.

6. Cultivating medium according to any one of the preceding claims, wherein said cultivating medium comprises surfactants.

7. Cultivating medium according to any one of the preceding claims, wherein said cultivating medium comprises approx. 1 to 5 % by weight, in particular approx. 2 to 4 % by weight, preferably approx. 2 to 3 % by weight of a binding agent on the basis of phenolic resin, and moreover at least 0.1 % by weight of polysaccharide product, in particular ether of potato starch, in proportion to the fibrous mass of said mineral wool.

8. Cultivating medium according to any one of the preceding claims, wherein said cultivating medium is provided in the form of a mineral wool felt, in particular of rock wool felt.

9. Cultivating medium according to claim 8, wherein said mineral wool felt has a bulk density of approx. 30 to 200 kg/m³, in particular approx. 70 to 120 kg/m³.

10. Cultivating medium according to any one of the preceding claims, wherein said cultivating medium has the form of an article having a particular shape, in particular of a slab.

11. Cultivating medium according to any one of the preceding claims, wherein said cultivating medium comprises a fertilizer and/or a plant protective agent and/or a fungicide and/or a bactericide.

12. Method for producing a cultivating medium according to any one of claims 1 through 11,
**characterized in that**
subsequent to the process of fiberizing a mineral molten material, a polysaccharide product, except starch-acrylic acid salt graft copolymers, which is insoluble in cold water, is added to said mineral wool, preferably at the same time as a binding agent;
said mineral wool is subjected to a thermal curing treatment; and
a primary mineral wool product obtained in this manner is subsequently exposed to air, transforming said primary mineral wool product into a hydrophilic final product.

13. Method according to claim 12, wherein said polysaccharide product is applied by spraying in form of an aqueous suspension.

14. Use of a cultivating medium according to any one of claims 1 to 11 for grassing of soilless substrates which are extensively irrigated, i.e. irrigated by natural precipitation.

15. The use of claim 14, wherein said cultivating medium is utilized for roof grassing measures.

16. The use of claim 15, wherein a roof is at least partly covered with the cultivating medium according to any one of claims 1 through 11 and provided with seeds or plants, with said cultivating medium, which is preferably provided in form of articles having particular shapes, in a given case being covered with a protective layer, in particular of humus or the like.

17. The use of polysaccharide products, except starch-acrylic acid salt graft copolymers, insoluble in cold water for producing hydrophilic mineral wool products having an increased water retaining capacity, which are preferably suited as a plant cultivating medium for soilless culture.

18. The use of claim 17, wherein said polysaccharide product is selected from among a group consisting of:
polysaccharides, esters of polysaccharides and inorganic acids, esters of polysaccharides and organic acids, ethers of polysaccharides,
starches, in particular potato starches, esters of starch and inorganic acids, esters of starch and organic acids, starch ethers, starch ethers containing nitrogen, and cationic ethers of starch; as well as
mixtures thereof.

## Patentansprüche

1. Aufwuchsmedium für Pflanzen, aus gebunder Mineralwolle, insbesondere Steinwolle,
**dadurch gekennzeichnet, daß**
ein kaltwasserunlösliches Polysaccharidprodukt mit Ausnahme von Stärke-Acrylsäuresalz-Pfropfcopolymeren vorgesehen ist und wenigstens an einem Teil der Oberfläche der Mineralwolle anhaftet.

2. Aufwuchsmedium nach Anspruch 1, dadurch gekennzeichnet, daß das Polysaccharidprodukt ausgewählt ist aus der Gruppe bestehend aus:
Polysacchariden, Estern aus Polysacchariden und anorganischen Säuren, Estern aus Polysacchariden und organischen Säuren, Polysaccharidethern;
Stärken, insbesondere Kartoffelstärken, Estern aus Stärke und anorganischen Säuren, Estern aus Stärke und organischen Säuren, Stärkeethern, stickstoffhaltigen Stärkeethern und kationischen Stärkeethern; sowie
deren Mischungen.

3. Aufwuchsmedium nach Anspruch 2, dadurch gekennzeichnet, daß das Polysaccharidprodukt ein quaternärer, kationischer Kartoffelstärkeether ist.

4. Aufwuchsmedium nach Anspruch 3, dadurch gekennzeichnet, daß der Kartoffelstärkeether durch folgende chemische Formel dargestellt ist:
Stärke-O-CH₂-CH(OH)-CH₂-N⁺(CH₃)₃ X⁻
wobei X ausgewählt ist aus der Gruppe bestehend aus: Halogen, insbesondere Chlor, OH, SO₄, oder dgl. .

5. Aufwuchsmedium nach einem der vorhergehenden Ansprüche, dadurch gekennzeichnet, daß das Aufwuchsmedium gefällte und/oder pyrogene Kieselsäure enthält.

6. Aufwuchsmedium nach einem der vorhergehenden Ansprüche, dadurch gekennzeichnet, daß das Aufwuchsmedium Tenside enthält.

7. Aufwuchsmedium nach einem der vorhergehenden Ansprüche, dadurch gekennzeichnet, daß das Aufwuchsmedium ca. 1 bis 5 Gew.-%, insbesondere ca. 2 bis 4 Gew.-%, vorzugsweise ca. 2 bis 3 Gew.-% eines Bindemittels auf Phenolharzbasis sowie wenigstens 0,1 Gew.-% Polysaccharidprodukt, insbesondere Kartoffelstärkeether, bezogen auf die Fasermasse der Mineralwolle enthält.

8. Aufwuchsmedium nach einem der vorhergehenden Ansprüche, dadurch gekennzeichnet, daß das Aufwuchsmedium als Mineralwollefilz, insbesondere Steinwollefilz, vorliegt.

9. Aufwuchsmedium nach Anspruch 8, dadurch gekennzeichnet, daß der Mineralwollefilz eine Rohdichte von ca. 30 bis 200 kg/m³, insbesondere ca. 70 bis 120 kg/m³ aufweist.

10. Aufwuchsmedium nach einem der vorhergehenden Ansprüche, dadurch gekennzeichnet, daß das Aufwuchsmedium als Formteil, insbesondere als Platte, ausgebildet ist.

11. Aufwuchsmedium nach einem der vorhergehenden Ansprüche, dadurch gekennzeichnet, daß das Aufwuchsmedium ein Düngemittel und/oder ein Pflanzenschutzmittel und/oder ein Fungizid und/oder ein Bakterizid enthält.

12. Verfahren zur Herstellung eines Aufwuchsmediums nach einem der Ansprüche 1 bis 11,
**dadurch gekennzeichnet, daß**
man im Anschluß an den Zerfaserungsvorgang einer Mineralschmelze ein kaltwasserunlösliches Polysaccharidprodukt mit Ausnahme von Stärke-Acrylsäuresalz-Pfropfcopolymeren, vorzugsweise gleichzeitig mit einem Bindemittel, zu der Mineralwolle gibt;
man die Mineralwolle einer thermischen Trocknungsbehandlung unterzieht; und
man ein derart erhaltenes Mineralwolleprimärprodukt anschließend einer Lufteinwirkung unterzieht, wobei sich das Mineralwolleprimärprodukt in ein hydrophiles Endprodukt umwandelt.

13. Verfahren nach Anspruch 12, dadurch gekennzeichnet, daß man das Polysaccharidprodukt in Form einer wäßrigen Suspension aufsprüht.

14. Verwendung eines Aufwuchsmediums nach einem der Ansprüche 1 bis 11 für die extensiv, d.h. durch natürliche Niederschläge bewässerte Begrünung von erdbodenfreien Unterlagen.

15. Verwendung nach Anspruch 14, dadurch gekennzeichnet, daß das Aufwuchsmedium für Dachbegrünungsmaßnahmen eingesetzt wird.

16. Verwendung nach Anspruch 15, dadurch gekennzeichnet, daß ein Dach mit dem Aufwuchsmedium nach einem der Ansprüche 1 bis 11 zumindest teilweise bedeckt und mit Saatgut oder Pflanzen bestückt wird, wobei gegebenenfalls Aufwuchsmedium, welches bevorzugt in Form von Formteilen vorliegt, mit einer Schutzschicht, insbesondere aus Humus oder dergleichen, bedeckt wird.

17. Verwendung von kaltwasserunlöslichen Polysaccharidprodukten mit Ausnahme von Stärke-Acrylsäuresalz-Pfropfcopolymeren zur Herstellung hydrophiler Mineralwolleprodukte mit erhöhtem Wasserrückhaltevermögen, welche sich bevorzugt als Aufwuchsmedium für Pflanzen in erdeloser Kultur eignen.

18. Verwendung nach Anspruch 17, dadurch gekennzeichnet, daß das Polysaccharidprodukt ausgewählt ist aus der Gruppe bestehend aus:
Polysacchariden, Estern aus Polysacchariden und anorganischen Säuren, Estern aus Polysacchariden und organischen Säuren, Polysaccharidethern,
Stärken, insbesondere Kartoffelstärken, Estern aus Stärke und anorganischen Säuren, Estern aus Stärke und organischen Säuren, Stärkeethern, stickstoffhaltigen Stärkeethern und kationischen Stärkeethern; sowie
deren Mischungen.

## Revendications

1. Milieu de culture pour plantes constitué de laine minérale liée, en particulier de laine de roche liée,
caractérisé en ce que
un produit polysaccharidique, à l'exception de copolymères greffés amidon-sel d'acide acrylique, qui est insoluble dans l'eau froide est fourni et amené à adhérer à une partie au moins de la surface de ladite laine minérale.

2. Milieu de culture selon la revendication 1, dans lequel ledit produit polysaccharidique est choisi dans le groupe formé par :
des polysaccharides, des esters de polysaccharides et d'acides minéraux, des esters de polysaccharides et d'acides organiques, des éthers de polysaccharides ;
des amidons, en particulier les fécules de pomme de terre, des esters d'amidon et d'acides minéraux, des esters d'amidon et d'acides organiques, des éthers d'amidon, des éthers d'amidon contenant de l'azote et des éthers cationiques d'amidon ; ainsi que
leurs mélanges.

3. Milieu de culture selon la revendication 2, dans lequel ledit produit polysaccharidique est un éther cationique quaternaire de fécule de pomme de terre.

4. Milieu de culture selon la revendication 3, dans lequel ledit éther de fécule de pomme de terre est représenté par la formule chimique suivante :
Fécule-O-CH₂-CH(OH)-CH₂-N⁺(CH₃)₃ X⁻
où X est choisi dans le groupe formé par : un halogène, en particulier le chlore, OH, SO₄, etc.

5. Milieu de culture selon l une quelconque des revendications précédentes, dans lequel ledit milieu de culture comprend de l'acide silicique précipité et/ou pyrogène.

6. Milieu de culture selon l'une quelconque des revendications précédentes, dans lequel ledit milieu de culture contient des agents tensio-actifs.

7. Milieu de culture selon l'une quelconque des revendications précédentes, dans lequel ledit milieu de culture comprend environ 1 à 5 % en poids, en particulier environ 2 à 4 % en poids, de préférence environ 2 à 3 % en poids, d'un liant à base de résine phénolique, et en outre, au moins 0,1 % en poids de produit polysaccharidique, en particulier un éther de fécule de pomme de terre, par rapport à la masse fibreuse de ladite laine minérale.

8. Milieu de culture selon l'une quelconque des revendications précédentes, dans lequel ledit milieu de culture est produit sous forme d'un feutre de laine minérale, en particulier un feutre de laine de roche.

9. Milieu de culture selon la revendication 8, dans lequel ledit feutre de laine minérale a une masse volumique apparente d'environ 30 à 200 kg/m³, en particulier d'environ 70 à 120 kg/m³.

10. Milieu de culture selon l'une quelconque des revendications précédentes, dans lequel ledit milieu de culture est sous forme d'un article ayant une configuration particulière, en particulier d'une plaque.

11. Milieu de culture selon l'une quelconque des revendications précédentes, dans lequel ledit milieu de culture comprend un engrais et/ou un agent protecteur pour plantes et/ou un fongicide et/ou un bactéricide.

12. Procédé de production d'un milieu de culture selon l'une quelconque des revendications 1 à 11,
caractérisé en ce que
après l'opération de transformation en fibres d'une matière minérale fondue, un produit polysaccharidique, à l'exception de copolymères greffés amidon-sel d'acide acrylique, qui est insoluble dans l'eau froide, est ajouté à ladite laine minérale, de préférence en même temps qu'un liant ;
ladite laine minérale est soumise à un traitement de durcissement thermique ; et
un produit primaire de laine minérale obtenu de cette manière est ensuite exposé à l'air, pour transformer ainsi ledit produit primaire de laine minérale en un produit final hydrophile.

13. Procédé selon la revendication 12, dans lequel ledit produit polysaccharidique est appliqué par pulvérisation sous forme d'une suspension aqueuse.

14. Utilisation d'un milieu de culture selon l'une quelconque des revendications 1 à 11 pour le gazonnement de substrats sans terre qui sont abondamment arrosés, c'est-à-dire arrosés par les précipitations naturelles.

15. L'utilisation de la revendication 14, dans laquelle ledit milieu de culture est utilisé pour le gazonnement de toits.

16. L'utilisation de la revendication 15, dans laquelle un toit est au moins partiellement recouvert du milieu de culture selon l'une quelconque des revendications 1 à 11 et pourvu de graines ou de plantes, ledit milieu de culture, qui est de préférence fourni sous forme d'articles ayant une configuration particulière, étant recouvert dans certains cas par une couche protectrice, en particulier d'humus ou autre.

17. L'utilisation de produits polysaccharidiques, à l'exception de copolymères greffés amidon-sel d'acide acrylique, insolubles dans l'eau froide pour la production de produits hydrophiles à base de laine minérale ayant une capacité accrue de rétention d'eau, qui sont de préférence appropriés comme milieu de culture de plantes pour la culture sans terre.

18. L'utilisation de la revendication 17, dans laquelle ledit produit polysaccharidique est choisi dans le groupe formé par :
des polysaccharides, des esters de polysaccharides et d'acides minéraux, des esters de polysaccharides et d'acides organiques, des éthers de polysaccharides,
des amidons, en particulier les fécules de pomme de terre, des esters d'amidon et d'acides minéraux, des esters d'amidon et d'acides organiques, des éthers d'amidon, des éthers d'amidon contenant de l'azote, et des éthers cationiques d'amidon ; ainsi que
leurs mélanges.
